Europäisches Patentamt

European Patent Office

Office européen des brevets

(19)

(11) Publication number: **0 644 533 A1**

## EUROPEAN PATENT APPLICATION

(12)

(21) Application number: **94114817.3**

(22) Date of filing: **20.09.94**

(51) Int. Cl.⁶: **G11B 5/596**, G11B 5/55

(30) Priority: **20.09.93 US 123517**

(43) Date of publication of application:
**22.03.95 Bulletin 95/12**

(84) Designated Contracting States:
**DE FR GB**

(71) Applicant: **Hewlett-Packard Company**
**3000 Hanover Street**
**Palo Alto,**
**California 94304 (US)**

(72) Inventor: **Hercher, Michael**
**330 West Shore Dr.**
**Marblehead, MA 01945 (US)**
Inventor: **Purmal, Gerald W.**
**P.O. Box 1746**
**Los Gatos, CA 95031 (US)**

(74) Representative: **Schoppe, Fritz, Dipl.-Ing.**
**Patentanwalt,**
**Georg-Kalb-Strasse 9**
**D-82049 Pullach (DE)**

(54) **Artifact, method, and apparatus for clock signal generation for computer memory disks.**

(57) An artifact (2) is used in a computer memory disk system. A method using the artifact (2), and a device incorporating the method is also included. The artifact (2), preferably implemented as an annulus concentric with the center of a rotatable element of the computer memory disk system, provides a signal when illuminated by an external laser beam (14; 84, 85) and then detected using laser techniques. Preferably, the rotatable element is a hard disk of the computer memory disk system.

Winchester drives provided with one or more optical windows to view the artifact-containing disk are especially adaptable to use of this artifact (2), apparatus, and method of this invention.

FIG 4

Rank Xerox (UK) Business Services
(3.10/3.09/3.3.4)

## FIELD OF THE INVENTION

This is an invention to generate a clock signal used in conjunction with the writing of servo-tracks on magnetic hard disks used as mass storage devices in computers. The servo-track writing process requires two separate functions: first, the positioning of the read/write head at the desired radial position on the hard disk; and, second, the synchronization of the writing of data on the servo-track with the angular position of the rotating hard disk. The current invention addresses the second of these requirements.

## SUMMARY OF THE INVENTION

An artifact, in the form of a scale, or coarse diffraction grating, is used in the generation of a master clock signal used during the servo-track writing operation, which includes an establishment of a sector mark every n degrees of rotation of the disk, where 360/n is an integer.

An artifact, when provided as an annulus concentric with the center of the disk, provides a master clock signal when illuminated by an external laser beam and then detected using laser metrology techniques. The master clock signal is used to fix the location of sector marks on each track of the hard disk.

Hard disk drives provided with optical windows to view a portion of the artifact are especially adaptable to use of these artifacts, this apparatus, and the method of this invention.

The invention described herein allows the clock signal generation to be performed without contact of the measuring system with the artifact. By using ports or windows in the housing of the computer memories which are transparent to the radiation used to create the interference pattern, the current invention allows the clock signal generation to be performed after the housing has been sealed, and without the need to reopen the housing.

## BACKGROUND OF THE INVENTION

An essential element of the modern computer, including the personal computer, is a mass-storage device.

Unlike the random access memory (RAM) which holds the data which is being immediately accessed by the computer, the mass-storage device holds data not currently being used, as well as programs not currently needed.

One of the most widely-used mass-storage devices used today is the so-called hard disk drive (HDD). The heart of this device is a disk, or platter, coated, often on both sides, with a magnetic surface, upon which information may be repeatedly written and read.

Such disk drives may contain a single platter having a diameter of two inches or less, with storage capacities of 20 megabytes (twenty million bytes, each byte containing eight bits, and each bit representing a data assertion or negation (a "one" or a "zero"). On the other hand, other disk drives may contain a number of platters, with diameters of eight inches and more, with storage capacities measured in gigabytes (ten to the power nine bytes of eight bits each).

As with all such magnetic media, the disk drive uses one or more read/write heads for each data surface to store and retrieve data. On the HDD, one or more read/write heads is supported by an arm, (hereinafter the "read/write arm"), and the head "floats" on a cushion of air a few micro-inches above the surface of the disk. The disk must thus be enclosed in a sealed housing to keep dust and other impurities out of the air cushion between the read/write heads and the disk surfaces.

The read/write arm is controlled by a control system containing electronics which accurately and precisely positions the head in accordance with a control signal.

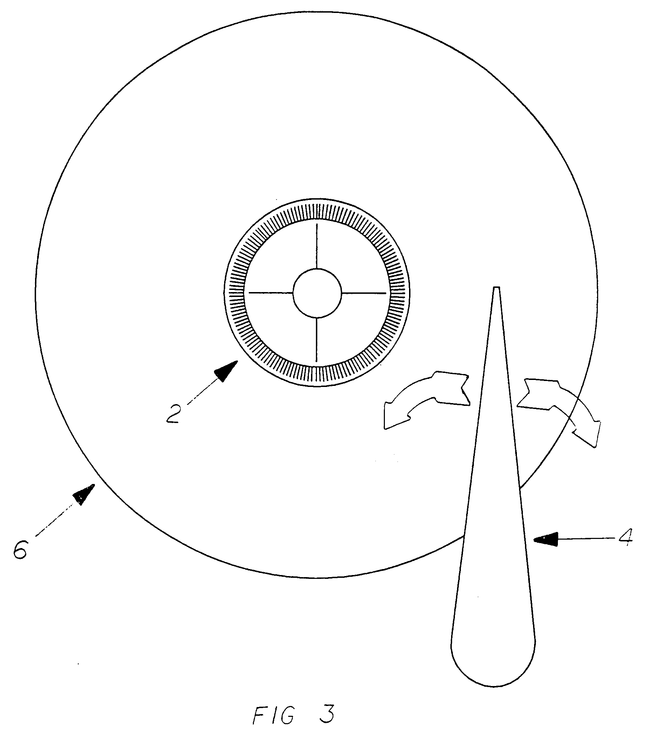

In a popular implementation of such a control system, the arm is pivoted about a point located outside of the circumference of the disk, so that the end of the arm describes an arc of a circle as it moves, as shown in Figure 3. This type of system is called a "Winchester" disk drive. In such a system, the position of any point on the surface of the disk may be specified in terms of the angular position of the arm about its axis, and the angular position of the disk.

In order to provide repeatability of positioning, it is necessary to perform an initialization before any data is written on the disk. For modern, high-density hard disk drives, this initialization consists of writing servo-tracks on either one dedicated surface, or on every surface of the disk drive. In the case where servo tracks are written on every surface of the disk drive, these servo tracks are called "embedded" servo tracks. This servo-track-writing process is carried out at the end of the disk's manufacturing process.

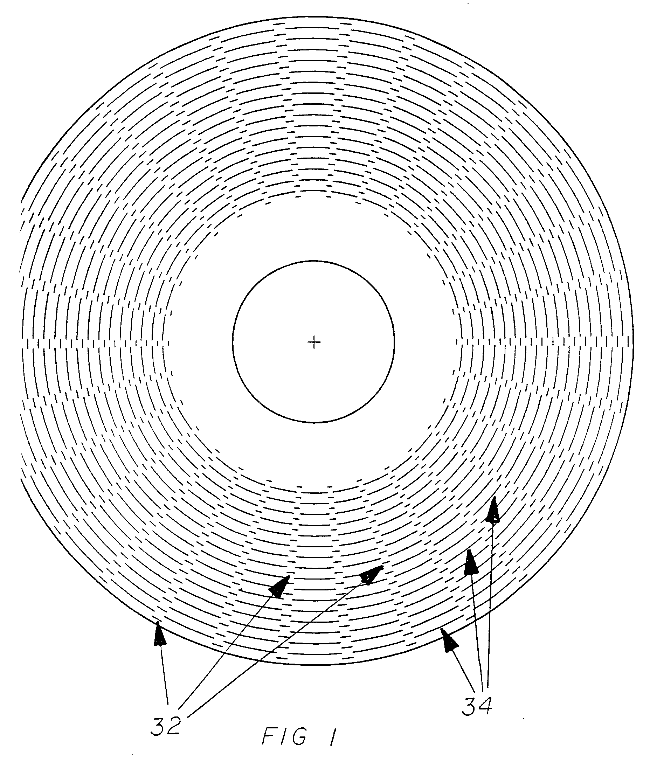

Figure 1 shows a representation of the manner in which embedded servo-track data are often written on a hard disk. The servo-track data is embedded in the sense that it is written in the same general location as the data to be stored. This figure, which is not to scale, illustrates the usual half-track servo writing, in which servo-track data 32 is written between the tracks which carry stored data 34. As the read/write head follows along a data track, it picks up signals from both adjacent servo tracks; the position of the read/write arm is servo-controlled to keep the signals from the two servo tracks equal in amplitude, thereby keeping the head centered on the data track. Information encoded in the servo track identifies both the track and sector position information (i.e. both the radial and angular coordinates on the hard disk surface). Different hard disk manufacturers may use different variants of this technique, and different data encoding schemes.

In the past, angular position measurements of the hard disk (usually referred to as clock data) have been obtained with the use of a temporary auxiliary read/write arm and head which is used to write and read a temporary magnetic clock track onto a surface of the hard disk. The frequency of the signal used to write the clock track is adjusted for closure, that is, to insure that each clock mark is equidistant from each adjacent clock mark. The clock marks are then read to provide clock or angular data during the servo-track writing process. Once the servo tracks are written the clock read/write arm is removed.

The pre-existing servo-track writing technique described above has a number of disadvantages. Specifically, (1) the hard disk enclosure must be opened to the surrounding environment in order to introduce the auxiliary clock read/write arm, (2) there is a significant amount of time required both to introduce the clock arm into the hard disk enclosure and to adjust the clock frequency to provide closure at the desired frequency on the clock track, and (3) the clock heads wear out and must be replaced periodically causing increased maintenance expense as well as lost production.

Examples of devices and processes which perform the generation of the master timing track are described in U.S. patents 4,996,608 and 3,893,172. These inventions utilize electronics which implement phase-locked loops to precisely control the frequency of the electrical signal used to write the clock track.

In such implementations as described above, the disk memory is manufactured as an assembly within a sealed housing which contains openings sealed with removable "peel-off" material. Next, an opening is uncovered, allowing for the insertion of the additional arm used for writing the clock signal. After the additional arm is introduced, the initialization process is performed, first by writing the clock track, and then by writing the servo tracks, including sector marks. After these processes have been completed, the arm used to write the clock track is removed, and the housing is re-sealed.

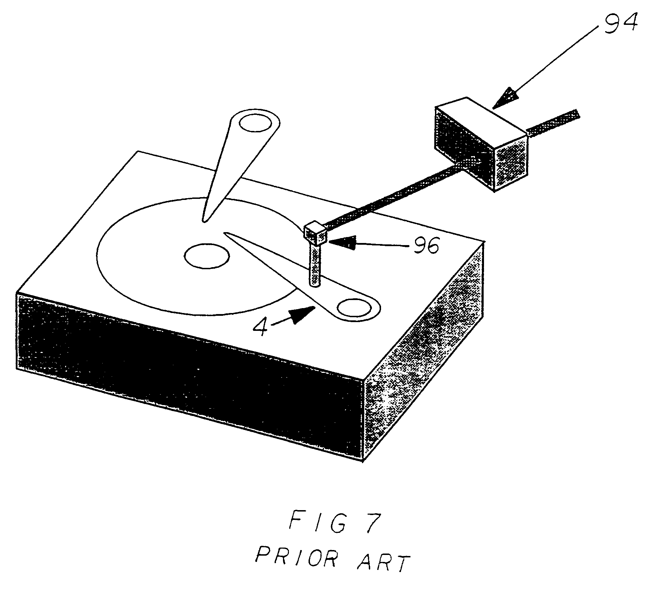

Figure 7 depicts a typical system of this type. The temporary arm, 92, is used for writing the clock track, and must be removed after the servo track writing is complete.

Some of the prior art uses laser interferometery techniques for the accurate measurement of position. The use of such techniques for the precise measurement of small displacements is well known. Such systems are described in U.S. patents 5,005,144 (Nakajima, 1989), 4,872,751 (Hercher, 1988), 4,322,162 (McKelvie et al., 1982), 4,850,693 (Deason et al., 1989), 4,432,239 (Bykov, 1984), and 4,436,419 (Stetson et al., 1984). U.S. patent 5,098,190 (Hercher et al., 1992) describes a system which provides enhanced accuracy by using an array of detectors.

Because of the problems of dust and other foreign matter damaging the disk surface during the initialization process, the processes performed according to the prior art must be performed in a "clean" environment, further increasing the cost and time required to complete.

As a result of the time required to be expended, as well as the complexity and amount of equipment required, the initialization of the disk memory has been a significant component of the cost of the manufacturing of the disk memory.

The current invention circumvents the problems associated with the generation of the clock signal. By attaching a small artifacts to the hub or surrounding portion of the disk drive, or by manufacturing an equivalent artifact into the corresponding disk drive component itself, and by providing the case of the disk drive with transparent glass or plastic windows, the present invention provides a means to precisely measure the angular position of the hard disk surface, without having to expose the hard disk drive to the surrounding environment, and without making any physical contact with the interior components of the hard disk drive.

DESCRIPTION OF THE INVENTION

A general object of the current invention is to provide a rapid, low cost, reliable, and accurate technology for accomplishing the clock signal generation described above.

A specific object of the present invention is to perform the clock signal generation without requiring opening of the sealed housing, and without the necessity of affixing and removing an additional arm required by previous methods, and without any physical contact between the measurement system and the disk.

According to one aspect of the present invention an artifact is provided (hereinafter the "clock artifact"), having the shape of an entire annulus or ring, and concentric with the center of the disk. The artifact may be either manufactured separately and then attached to the disk, (or to the disk hub, or to the disk's spindle bearing) or it may be created as an integral part of the disk, during the manufacturing of the disk. Techniques for production of the artifact include e-beam lithography, laser lithography, photographic means, machining, embossing, molding, and etching, and are well known.

The reflective or transmissive artifact can be one of any of the standard types used in optical measurements. It may be of the type whereby ridges are provided in a repetitive pattern, on the order of one or two thousand ridges per inch, with the distance between the high and low points of the ridges approximately one fourth of a wavelength of the radiation used to illuminate, or any odd integer multiple thereof. Or it may of the type in which a pattern of varying optical reflectivity or transmissiveness is repeated, at a spatial density approximately as above.

Whichever method is used, the artifact may be provided on the disk very inexpensively, and once applied need never thereafter be removed, resulting in a significant cost advantage over the prior art.

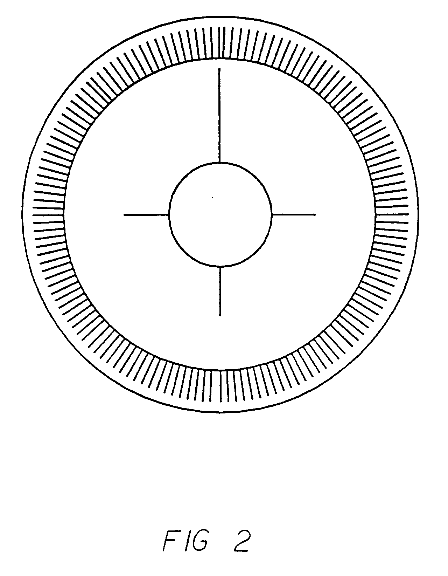

A typical artifact contains 4096 lines around its circumference of about 1 1/2 inches, more or less. Figure 2 shows a typical configuration of an artifact.

Another aspect of the present invention provides for the inclusion of windows, or ports, in the housing of the disk drive, so that the artifact can be illuminated with a source of electromagnetic radiation, and so that the interference pattern produced thereby may be viewed.

Once the artifacts are provided on the disk, the disk may be sealed in its housing, and the housing need not be reopened thereafter. The subsequent initialization is thus performed without exposing the disk mechanism to dust and other foreign objects which could degrade performance, or damage the disk, and is thus a significant advantage over prior art.

Still another aspect of the present invention is the temporary attachment of an optical metrology system external to the sealed housing, which produces the master timing clock signal (hereinafter "clock metrology system") . Within this clock metrology system, an optical source is directed onto the artifact, which reflects and diffracts the beam. The diffracted signal is next directed, combined, and processed, via an optical system, to produce an interference pattern, and is then transformed into an electrical signal by a detector (hereinafter the "clock detector"), which produces electrical signals which, after electronic processing, becomes the master clock signal.

Yet another aspect of the present invention is the use, in the metrology systems, of spatial filters to enhance the production of the interference patterns. These spatial filters are opaque shields in the optical path, containing holes, spaces, or areas transparent to the radiation, so that only certain orders of the beams diffracted by the artifacts are allowed to combine.

Yet another aspect of the present invention is the packaging of the metrology system in a physical module, so that the time and effort required to align the optics of the metrology systems is minimized. The metrology module associated with the clock metrology system will be referred to hereinafter as the "clock module".

The packaging of the entire metrology system in modules is thought to be a significant advance over the prior art, since the modules are aligned and calibrated once and only once.

A further advance over the prior art is the use of an optical system and detector which is located at some distance from the artifact. This allows read out through a window and without physical contact between the artifact and the optical system and detector.

Although it is presently contemplated that the invention described herein will be especially useful in servo-track writing of computer memory disks, said invention may also be used for measuring rotational position in other types of applications, including, inter alia, optical disk memory technology.

Another advance over the prior art is the processing of the interferometric signal, which provides a substantial gain in resolution and accuracy relative to the prior art.

BRIEF DESCRIPTION OF THE DRAWINGS

These, and further features of the invention, may be better understood with reference to the accompanying specification and drawing depicting the preferred embodiment, in which:

Figure 1 depicts the surface of a magnetic data disk, showing the embedded servo tracks, and the sector marks.

Figure 2 depicts a typical artifact.

Figure 3 depicts a portion of a Winchester disk drive (i.e., of the rotary actuator type) showing the magnetic disk and the read/write arm, and showing the path of the head as the arm is rotated.

Figure 4 depicts a Winchester disk memory being initialized, including an artifact, and showing the physical module containing the metrology system mounted as required for the servo-track-writing process.

Figure 5 depicts the clock metrology system for the first preferred embodiment of the invention, using a single-frequency laser source, showing the laser beam reflecting off the artifact, splitting into two beams thereafter, thence being directed through an optical system, spatially filtered, and detected by the structured detector.

Figure 6 depicts the clock metrology system for the second preferred embodiment of the invention, using a dual-frequency laser source, showing the laser beam being split into beams of two separate frequencies, diffracting off the artifact thereafter, thence being directed through an optical system, spatially filtered, and detected by the detector.

Figure 7 depicts one example of the prior art which the current invention replaces, and contains a temporary arm used for clock writing.

## DETAILED DESCRIPTION OF THE PREFERRED EMBODIMENTS

The first embodiment uses the structured detector technique described by Hercher et al. in US patent 5,098,190, which is incorporated by reference hereby.

Referring to Figure 2, the artifact is in the shape of a ring, with alternate stripes or ridges equidistant from each other, and which artifact is either a part of the disk, the disk hub, the disk clamp, or the disk spindle or is rigidly attached to one of the above components.

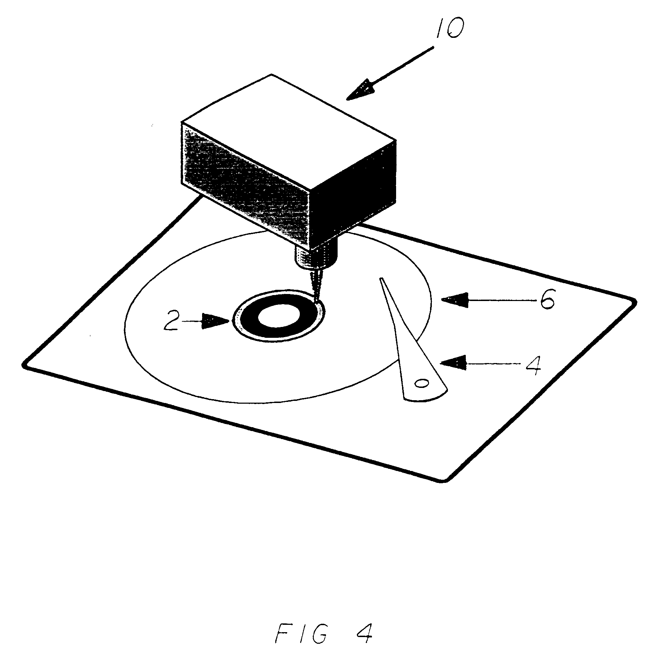

Referring to Fig 4., the artifact, 2, is illuminated by laser radiation from the clock metrology system, 10, packaged in module 10.

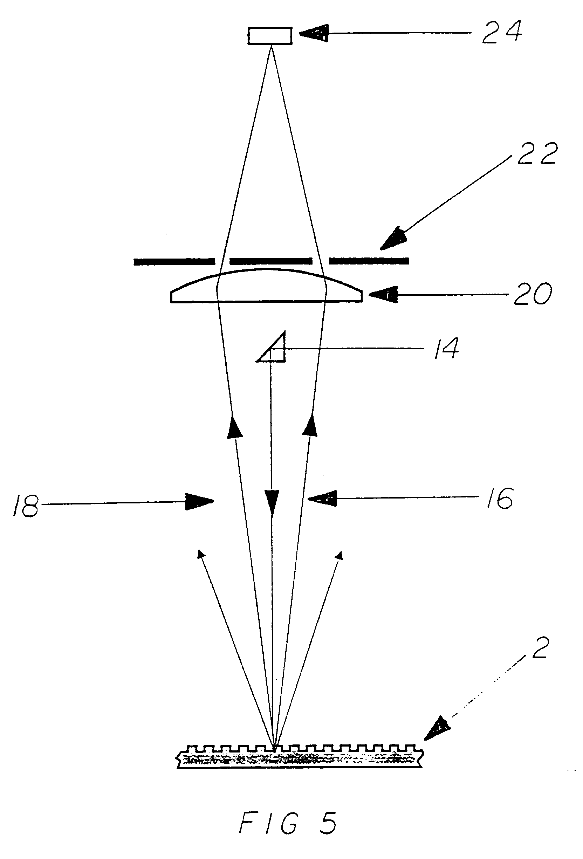

Referring to Figure 5, a single-frequency laser beam 14 enters through a window in the housing (not shown), and impinges upon the artifact 2, which diffracts the beam into various orders on either side of the spectral beam 16, 18. These diffracted orders are directed, via the optical system 20, through spatial filter 22 which allows only the plus and minus one orders to combine, forming an interference fringe pattern on the structured clock detector 24. This structured detector is in the form of an array of separate detector elements, each element of which produces an electrical signal independent of each other element of the array.

As the artifact moves a distance d, the entire fringe pattern moves a distance on the structured clock detector proportional to d. Referring to Figure 4, the output of the clock detector is signal-conditioned within module 10 to produce the electrical clock signal.

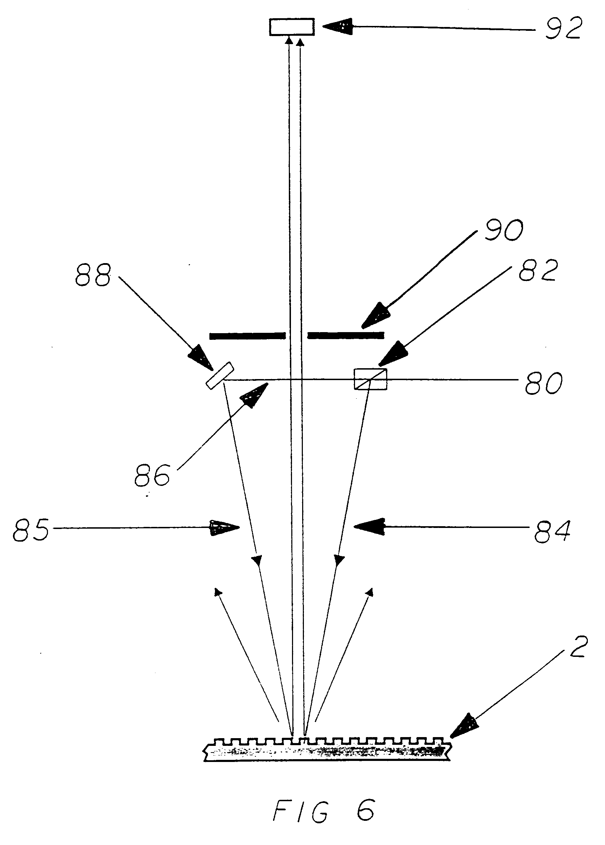

A second embodiment is similar to the first embodiment, except that the metrology system differs between the two embodiments. In this second embodiment, referring to Figure 6, within the clock module, a dual-frequency laser source produces a beam, 80, which contains two discrete frequencies, f1 and f2, with each frequency having a different polarization. Beam 80 is directed onto polarizing beam splitter 82. The portion of the laser source containing radiation of frequency f1 only, is reflected onto the artifact 2, while the remainder, containing radiation of frequency f2 only, is transmitted through the polarizing beam splitter 82 and thence, as beam 86, onto mirror 88, where it is reflected as beam 85, and thence onto the artifact 2.

The two beams, 84 and 85, impinge onto the detector at angles equal in magnitude and opposite in direction to each other. These two beams are diffracted by artifact 2 into various orders on each side of the specular beams, and these diffracted orders are directed back into the clock module, through spatial filter 90, which allows only the plus and minus one orders of each frequency to combine, forming a heterodyne optical signal whose frequency, f3, is:

$$f3 = |f2-f1| \qquad [1]$$

This optical signal is directed onto detector 92, which produces an electrical signal whose frequency is the heterodyne frequency f3.

As the artifact 2 moves at a speed v1, the frequency of the electronic heterodyne signal is Doppler shifted by a proportional amount. An electronic circuit integrates this Doppler shifted signal over a period of time, producing a signal which is proportional to distance moved by the artifact during that time.

Although the preferred electro-magnetic radiation source for this invention is the laser, other sources of electro-magnetic radiation may be used, including, inter alia, X-rays, E-beams, and light-emitting diodes.

While the invention has been described with reference to specific embodiments, it will be apparent that improvements and modifications may be made within the purview of the invention without departing from the scope of the invention defined in the appended claims.

**Claims**

1. A method for generating a signal in a computer memory disk system,

said computer memory disk system comprising a rotatable element,

where the signal has a predetermined number of pulses for each predetermined rotational movement of the rotatable element of the computer memory disk system,

where the method comprises the steps of:

providing an artifact (2) on the rotatable element, in the form of an annular diffraction grating concentric with the center of the rotatable element;

rotating the rotatable element by rotatable driving means;

providing a source of electromagnetic radiaton;

illuminating the artifact (2) by the electromagnetic radiation (14; 84, 85) and diffracting the electromagnetic radiation thereby;

directing the diffracted radiation onto a detector (24; 92); and

processing the output of the detector, producing the signal thereby.

2. The method of claim 1,

where the signal is a clock signal on computer memory disk systems,

where the rotatable element is a computer memory disk contained within a memory disk enclosure,

where the clock signal has a predetermined number of equally spaced pulses for each revolution of the computer memory disk, and

where a clock signal is produced by processing the output of the detector.

3. A method for generating a clock signal on computer memory disk systems, where a computer memory disk is contained within a memory disk enclosure, where the clock signal has a predetermined number of equally spaced pulses for each revolution of the computer memory disk, and where the method comprises:

providing an artifact (2) on the disk, in the form of an annular diffraction grating concentric with the center of the disk;

rotating the disk by rotatable driving means;

providing a source of electromagnetic radiaton;

illuminating the artifact (2) by the electromagnetic radiation (14; 84, 85) and diffracting the electromagnetic radiation thereby;

directing the diffracted radiation onto a detector (24; 92); and

processing the output of the detector, producing the clock signal thereby.

4. The method of claim 1, 2 or 3, wherein the directing of the diffracted electromagnetic radiation onto a detector is done by an optical directing sub-system (20, 22; 90).

5. The method of claim 1, 2, 3 or 4, wherein the method is used for writing of servo tracks (32) on a magnetic disk memory.

6. The method of claim 4, wherein the diffracted electromagnetic radiation (16, 18) is a result of reflection of the artifact (2).

7. The method of claim 5, wherein the source of electromagnetic radiation is a single-frequency laser beam (14), and further comprising:

selecting of two beams from the reflected and diffracted radiation;

combining the two reflected beams by an optical combining subsystem, producing an interference pattern having a phase thereby; and

detecting the interference pattern by an array of detectors, thereby producing the clock signal.

8. The method of claim 7 wherein the selecting of the two reflected beams (16, 18) is accomplished by applying a spatial filter (22) to the electromagnetic radiation diffracted and reflected from the artifact (2).

9. The method of claim 7, further comprising:

detecting the interference pattern by an array of detectors (24; 92) such that at least three interferometric electric signals which differ only in their phases are generated;

calculating the phase of the detected interference pattern; and

calculating the precise position of the clock pulses from the calculated phase.

10. The method of one of of the preceding claims, further comprising:

providing a dual-frequency laser beam (80), consisting of two superimposed beams of slightly different frequencies, as the source of electromagnetic radiation; and

directing the two beams onto the artifact (2) by optical directing means (82, 88), whereby each beam impinges upon the artifact (2) at a different angle, and where the angle formed by each beam, as measured from a normal to the artifact (2), is equal in magnitude and opposite in sense to the other such angle, so that the two beams combine, by optical combining means, in the plane of the artifact to create an interference pattern.

11. The method of one of of the preceding claims further comprising packaging the source of electromagnetic radiation, optical combining sub-system, optical directing sub-system, and detector into a single modular package (10) located outside the memory disk enclosure.

12. The method of one of the preceding claims 1 to 9, wherein

the computer memory disk system forms an assembly within a sealed housing,

and further comprising:

providing an electromagnetic-radiation-permeable window in the sealed housing positioned so that at least a portion of the artifact is visible through the window.

13. An apparatus for generating a signal in a computer memory disk system,

said computer memory disk system comprising a rotatable element,

where said rotatable element is rotated by rotatable driving means,

where the signal has a predetermined number of pulses for each predetermined rotational movement of the rotatable element of the computer memory disk system,

where the apparatus comprises:

a source of electromagnetic radiation;

an artifact (2) on the rotatable element, in the form of an annular diffraction grating concentric with the center of the rotatable element;

a detector (24; 92), which produces an electrical signal proportional to the electromagnetic radiation (14; 84, 85) diffracted by the artifact (2); and

an electronic processing sub-system which processes the output of the detector (24; 92) producing the signal thereby.

14. The apparatus of claim 13,

where the signal is a clock signal on computer memory disk systems,

where the rotatable element is a computer memory disk contained within a memory disk enclosure,

where the clock signal has a predetermined number of equally spaced pulses for each revolution of the computer memory disk, and

where the electronic processing sub-system produces a clock signal by processing the output of the detector.

15. An apparatus for generating a clock signal on a computer memory disk system, where the computer memory disk is contained within a memory disk enclosure, where the disk memory is rotated by rotatable driving means, where the clock signal has a predetermined number of equally spaced pulses for each revolution of the computer memory disk, and where the apparatus comprises:

a source of electromagnetic radiation;

an artifact (2) rigidly coupled to the disk, in the form of an annular diffraction grating concentric with the center of the disk, which diffracts the electromagnetic radiation;

a detector (24; 92), which produces an electrical signal proportional to the electromagnetic radiation (14; 84, 85) diffracted by the artifact (2); and

an electronic processing sub-system which processes the output of the detector (24; 92) producing the clock signal thereby.

16. The apparatus of claim 13, 14, 15 or 16, further comprising an optical directing sub-system (20, 22; 90) which directs the diffracted electromagnetic radiation onto the detector (24; 92).

17. The apparatus of one of the claims 13 to 16, wherein the apparatus is used for the writing of servo tracks (32) on a magnetic disk memory.

18. The apparatus of one of the claims 13 to 17, wherein the diffracted electromagnetic radiation (16, 18) is a result of reflection off the artifact (2).

19. The apparatus of claim one of the claims 13 to 18, wherein the source of electromagnetic radiation is a single-frequency laser beam (14), and further comprising:

an optical selecting sub-system which selects the reflected radiation into two reflected beams;

an optical combining sub-system which combines the two reflected beams (16, 18), producing an interference pattern having a phase thereby; and

an array of detectors (24) which detects the interference pattern, thereby producing the clock signal.

20. The apparatus of claim 19, further comprising a spatial filter (22).

21. The apparatus of claim 19, wherein the detector (24) is in the form of an array of separate detection elements, and further comprising:

a multi-phase detector for detecting the interference pattern such that at least three interferometric electric signals which differ only in their phases are generated;

a phase-calculating sub-system which calculates the accumulated phase of the detected interference pattern; and

a clock-generating sub-system which calculates the precise position of the clock pulses from the calculated phase.

22. The apparatus of one of the claims 13 to 21, wherein the source of electromagnetic radiation is a dual-frequency laser beam (80), consisting of two superimposed beams of a slightly different frequencies, and further comprising:

an optical directing sub-system (82, 88) which directs the two beams (82, 88) onto the artifact (2), whereby each beam impinges upon the artefact (2) at a different angle, and where the angle formed by each beam, as measured from a normal to the artifact, is equal in magnitude and opposite in sense to the other such angle, so that the two beams combine, by optical combining means, in the plane of the artifact to create an interference pattern.

23. The apparatus of one of the claims 13 to 22, further comprising:
a modular package (10) containing the source of electromagnetic radiation, optical combining sub-system, optical directing sub-system, spatial filter, and detector into a single modular package, located outside the memory disk sealed housing.

24. The apparatus of one of the preceding claims 13 to 23, wherein
the computer memory disk system form an assembly contained within a sealed housing, the apparatus further comprising:
an electromagnetic-radiation-permeable window in the sealed housing positioned so that at least a portion of the artifact is visible through the window;

25. An artifact used for generating a signal in a computer hard disk memory system,
said computer hard disk memory system comprising a ratatable element rotated by rotatable driving means,
the artifact being closely coupled to the rotatable element,
wherein the artifact is illuminated by electromagnetic radiation, the electromagnetic radiation being diffracted from the artifact and thence directed onto a detector, and
where the electrical output of the detector is processed to produce a signal,
said artifact comprising a coarse diffraction grating in the form of a ring, wherein the lines are aligned radially to the center of the ring.

26. An artifact used for generating a clock signal on a computer hard disk memory, the hard disk memory being rotated by rotatable driving means, and having a spindle, a hub, and at least one surface, the artifact being closely coupled to the spindle, wherein the artifact is illuminated by electromagnetic radiation, the electromagnetic radiation being diffracted from the artifact and thence directed onto a detector, and where the electrical output of the detector is processed by metrology techniques to produce a clock signal, comprising a coarse diffraction grating in the form of a ring, wherein the lines are aligned radially to the center of the ring.

27. The artifact of claim 25 or 26, wherein the artifact further reflects the electromagnetic radiation.

28. The artifact of claim 26 or 27, where the diffraction grating further comprises a repeating pattern of lines in the form of ridges, wherein the distance between the high and low points of the ridges is an odd integer multiple of one fourth of the wavelength of the electromagnetic radiation being diffracted and reflected from the artifact.

29. The artifact of claim 25, 26, 27 or 28, where the diffraction grating further comprises an alternating pattern of lines of differing optical reflectivity.

FIG 1

FIG 2

FIG 3

FIG 4

FIG 5

FIG 6

FIG 7
PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | US-A-4 996 608 (WIDNEY)<br>* the whole document * | 1-29 | G11B5/596<br>G11B5/55 |
| A | IBM TECHNICAL DISCLOSURE BULLETIN,<br>vol.33, no.11, April 1991, NEW YORK US<br>page 428, XP000110459<br>'HEAD POSITIONING TO SERVOWRITE MAGNETIC<br>DISK FILES'<br>* the whole document * | 1-29 | |
| A | EP-A-0 530 698 (CANON K.K.)<br>* page 6, line 37 - line 43; figure 8 * | 1-29 | |
| A | US-A-5 179 485 (TAMAYAMA)<br>* the whole document * | 1-29 | |
| A | RESEARCH DISCLOSURE,<br>no.328, August 1991, HAVANT GB<br>page 616, XP000217929<br>'ACTUATOR CONTACT-FREE SERVO WRITER FOR<br>DASD USING PHASE-DEMODULATED LDV'<br>* the whole document * | 1-29 | TECHNICAL FIELDS SEARCHED (Int.Cl.6)<br><br>G11B |
| A | SOLID STATE TECHNOLOGY,<br>vol.34, no.5, May 1991, WASHINGTON US<br>pages 207 - 211, XP000216494<br>C. LEE 'SERVOWRITERS: A CRITICAL TOOL IN<br>HARD DISK MANUFACTURING' | 1-29 | |

The present search report has been drawn up for all claims

| Place of search | Date of completion of the search | Examiner |
|---|---|---|
| THE HAGUE | 8 December 1994 | MOYLE, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document